# EUROPÄISCHE PATENTSCHRIFT

(11) **EP 1 401 680 B1**
(45) Veröffentlichungstag und Bekanntmachung des Hinweises auf die Patenterteilung: **05.07.2006**
(21) Anmeldenummer: 03752775.1
(22) Anmeldetag: 22.05.2003
(51) Int. Cl.: B60R 5/04

(54) **LADEBODEN F R EIN FAHRZEUG UND BELADEVORRICHTUNG**
LOADING BASE FOR A VEHICLE AND LOADING DEVICE
PLANCHER DE CHARGEMENT POUR UN VEHICULE ET DISPOSITIF DE CHARGEMENT

(30) Priorität: 22.05.2002 DE 10223041
(43) Veröffentlichungstag der Anmeldung: 31.03.2004
(73) Patentinhaber: Faurecia Innenraum Systeme GmbH, 76767 Hagenbach (DE)
(72) Erfinder: NICK, Albrecht, 38550 Isenbüttel (DE); GEISSLINGER, Jürgen, 91792 Ellingen (DE); THOMA, Wulf, 38518 Gifhorn (DE)
(74) Vertreter: Richardt, Markus Albert
(86) Internationale Anmeldenummer: PCT/EP2003/005353
(87) Internationale Veröffentlichungsnummer: WO 2003/097411

(56) Entgegenhaltungen:
- DE-A- 19 731 324
- DE-A- 19 815 466
- DE-U- 29 607 956
- US-A- 4 455 948
- US-A- 5 054 578
- PATENT ABSTRACTS OF JAPAN vol. 2002, no. 05, 3. Mai 2002 (2002-05-03) -& JP 2002 012083 A (FUJI HEAVY IND LTD), 15. Januar 2002 (2002-01-15)

## Beschreibung

Die Erfindung betrifft eine Beladevorrichtung nach dem Oberbegriff von Patentanspruch 1.

Aus dem Stand der Technik sind verschiedene ausziehbare Ladeböden und Beladevorrichtungen bekannt. Aus der DE-OS 23 02 972 ist eine ausziehbare Ladefläche für Kombifahrzeuge bekannt. Hierbei sind auf der Ladefläche des Fahrzeugs Führungsschienen angeordnet. Die ausziehbare Ladefläche wird auf diese Führungsschienen aufgebracht und kann auf den Führungsschienen auf Rollen bewegt werden. Das Ladegut kann auf die ausgefahrene Ladefläche gesetzt und dann in den Laderaum des Fahrzeugs eingefahren werden.

Aus der DE 296 08 955 U1 ist eine Beladevorrichtung für Pkws oder Transporter bekannt. Diese Beladevorrichtung besteht aus einer Führungseinheit, die am Boden des Laderaums des Fahrzeugs montiert wird. Auf der Führungseinheit befindet sich eine verschiebbare Ladeplatte, die aus einer Transportposition innerhalb des Laderaums in eine Belade- oder Entladeposition bewegbar ist, in der die Ladeplatte sich außerhalb des Fahrzeugs hinter dem Fahrzeugheck befindet.

Aus der DE 196 19 126 A1 ist eine Beladeeinrichtung an einem Kraftfahrzeug mit einer schwenkbaren Heckklappe bekannt. In einem hinteren von der Heckklappe verschließbaren Laderaum des Kraftfahrzeugs sind an beiden Seiten des Bodens des Laderaums befestigte Führungsschienen vorgesehen, die in Fahrzeuglängsrichtung verlaufen. Zum Beladen ist es erforderlich, dass eine Heckklappe des Fahrzeugs um eine untere Fahrzeugquerachse nach hinten in eine horizontale Beladestellung geschwenkt wird.

Aus der DE 197 49 158 C2 ist ein Ladeboden für den Laderaum eines Fahrzeugs bekannt. Der Ladeboden ist auf Rollen gelagert und zum Teil etwa parallel zum Fahrzeugboden aus dem Laderaum ausfahrbar. Quer zur Fahrtrichtung weist der Ladeboden eine Sollknickstelle zur Verbesserung des Crash-Verhaltens auf.

Aus der DE 197 31 324 A1 ist ein ausziehbarer Ladeboden für ein Fahrzeug bekannt, der über Laufrollen entlang von Stützschienen verlagerbar ist. Mit dem Fahrzeugkörper sind die Stützschienen dabei so verbunden, dass sie in der Höhe verstellbar sind. Die Höhenverstellung erfolgt über zwei Parallelogramm-Lenker unter Zuhilfenahme eines Verstellzylinders.

Ein weiterer etwa parallel zum Fahrzeugboden auf Führungsschienen aus dem Laderaum ausfahrbarer Ladeboden ist aus der US 3,132,755 bekannt.

Ferner ist aus der gattungsbildenden US 4,455,948 ein Fahrzeugkofferraumtisch bekannt, der von einer Lagerposition innerhalb des Fahrzeugs zu einer Position außerhalb des Fahrzeugs ausgefahren werden kann. Das Ausfahren des Tischs erfolgt hierbei mittels eines Hubscheren-Prinzips. Die asymmetrische ausgebildete Hubscherenmechanik erfordert jedoch stets eine kombinierte Verstellung des Tischs in vertikaler sowie in horizontaler Richtung.

Ausfahrbare Ladeböden und Beladevorrichtungen der genannten Art ermöglichen ein wesentlich vereinfachtes Be- und Entladen des Fahrzeugs durch Auflegen der Fracht auf den rollfähigen Ladeboden. Auf den ausgefahrenen Ladeboden wird dabei eine Last aufgelegt, die mit geringem Kraftaufwand mit dem Ladeboden in das Fahrzeuginnere geschoben werden kann.

Ein gemeinsamer Nachteil der vorbekannten Beladevorrichtungen ist jedoch, dass aufgrund der Ausziehmechanik für den Ladeboden Laderaum im beträchtlichen Umfang verloren geht.

Der Erfindung liegt daher die Aufgabe zu Grunde eine verbesserte Beladevorrichtung für ein Fahrzeug, insbesondere für ein Kraftfahrzeug mit Heckklappe, zu schaffen.

Die der Erfindung zu Grunde liegende Aufgabe wird mit den Merkmalen des unabhängigen Patentanspruchs 1 gelöst. Bevorzugte Ausführungsformen der Erfindung sind in den abhängigen Patentansprüchen angegeben.

Erfindungsgemäß ist der Antrieb an der Unterseite des Ladebodens angeordnet. Die Anordnung des Antriebs an der Unterseite des Ladebodens ermöglicht eine besonders platzsparende Ausführung der erfindungsgemäßen Beladevorrichtung, so dass kein oder nur wenig Ladenutzraum verloren geht. Dabei ist der Antrieb im eingefahrenen Zustand des Ladebodens an der der Ladekante des Fahrzeugs abgewandten Seite des Ladebodens angeordnet. Beim Ausfahren des Ladebodens bewegt sich also der an dem Ladeboden befestigte Antrieb auf die Ladekante zu.

Ein besonderer Vorteil der Erfindung ist, dass der Ladenutzraum nicht oder nur unwesentlich durch den anhebbaren und ausziehbaren Ladeboden und die entsprechende Beladevorrichtung verkleinert wird. Nach einer bevorzugten Ausführungsform der Erfindung wird dies so erreicht, dass für die Höhenverstellung des Ladebodens Parallelogrammlenker vorgesehen sind.

Die Parallelogrammlenker sind mit einem Ende an dem Fahrzeugboden angelenkt. Das andere Ende der Parallelogrammlenker liegt jeweils an der Unterseite des Ladebodens an. Zumindest einer der Parallelogrammlenker ist für die Höhenverstellung des Ladebodens antreibbar ausgebildet.

Nach einer bevorzugten Ausführungsform der Erfindung weist zumindest einer der Parallelogrammlenker ein Zahnsegment auf, in das über eine Welle eine Antriebskraft eingeleitet werden kann, um den Ladeboden anzuheben oder abzusenken. Die Welle wird dabei von einem an dem Ladeboden angeordneten Antrieb angetrieben. Bei dem Antrieb handelt es sich vorzugsweise um einen elektromechanischen Antrieb.

Nach einer weiteren bevorzugten Ausführungsform der Erfindung ist das Zahnsegment bogenförmig, insbesondere in der Form eines Kreissegments, ausgebildet. Die Bogen- oder Kreisform kann dabei konkav oder konvex mit Bezug auf die Unterseite des Ladebodens ausgeführt sein.

Nach einer weiteren bevorzugten Ausführungsform der Erfindung ist zwischen mindestens zwei in horizontaler Richtung hintereinander angeordneten Paralelogrammlenkern eine Zahnstange angeordnet. Die Zahnstange dient zur Einleitung einer Kraft für die horizontale Verlagerung des Ladebodens.

Nach einer weiteren bevorzugten Ausführungsform der Erfindung sind das Zahnsegment und die Zahnstange so angeordnet, dass die Welle zum Beispiel beim Anheben und Ausfahren des Ladebodens zunächst das Zahnsegment zur Höhenverstellung des Ladebodens überfährt und dann auf der Zahnstange weiterläuft, um eine translatorische Ausschubbewegung des Ladebodens zu realisieren.

Nach einer weiteren bevorzugten Ausführungsform der Erfindung ist ein Steuerungsgerät für den Ladeboden und für eine Heckklappe des Fahrzeugs vorgesehen. Ein Benutzer kann ein Bewegungskommando für den Ladeboden in das Steuergerät eingeben. Hierzu ist ein entsprechendes Betätigungselement an der Instrumententafel und / oder im Laderaum und / oder an einer Fernbedienung vorgesehen.

Über dieses zumindest eine Betätigungselement können Bewegungskommandos eingegeben werden, wie zum Beispiel zum Ausfahren und Einfahren des Ladebodens. Wird beispielsweise ein Bewegungskommando zum Ausfahren des Ladebodens in das Steuergerät eingegeben, so aktiviert das Steuergerät zunächst die automatische Öffnung der Heckklappe des Fahrzeugs, bevor der Antrieb des Ladebodens angesteuert wird. Entsprechend wird im umgekehrten Fall beim Einfahren des Ladebodens verfahren, wobei zunächst der Antrieb des Ladebodens zum Einfahren aktiviert wird und, nachdem der Ladeboden eingefahren ist, die Heckklappe automatisch geschlossen wird.

Besonderes vorteilhaft ist bei der vorliegenden Erfindung, dass sowohl das Heben und Ausfahren als auch das Einfahren und Absenken des Ladebodens voll automatisch erfolgen kann. Dies wird durch den an dem Ladeboden selbst angeordneten Antrieb ermöglicht. Dabei ist insbesondere vorteilhaft, dass weder zum Ausfahren noch zum Einfahren des Ladebodens Muskelkraft erforderlich ist.

Femer ermöglicht es die vorliegende Erfindung, dass sich der Ladeboden in jedem Betriebszustand in einer definierten Position befindet. Die definierte Position des Ladebodens wird dabei durch eine entsprechende Ansteuerung des Antriebs erreicht.

Im Weiteren werden bevorzugte Ausführungsformen der Erfindung mit Bezugnahme auf die Zeichnungen näher erläutert. Es zeigen:
- Figur 1: eine schematische Seitenansicht einer ersten Ausführungsform einer erfindungsgemäßen Beladevorrichtung,
- Figur 2: eine perspektivische Ansicht der Beladevorrichtung der Figur 1,
- Figur 3: eine perspektivische Detailansicht der Beladevorrichtung der Figuren 1 und 2,
- Figur 4: eine perspektivische Ansicht der Beladevorrichtung der Figuren 1, 2 und 3 bei angehobenem Ladeboden,
- Figur 5: eine perspektivische Detailansicht der Figur 4,
- Figur 6: eine perspektivische Ansicht einer weiteren Ausführungsform der Beladevorrichtung in dem Laderaum eines Fahrzeugs,
- Figur 7: die perspektivische Ansicht der Figur 6 bei ausgefahrenem Ladeboden.

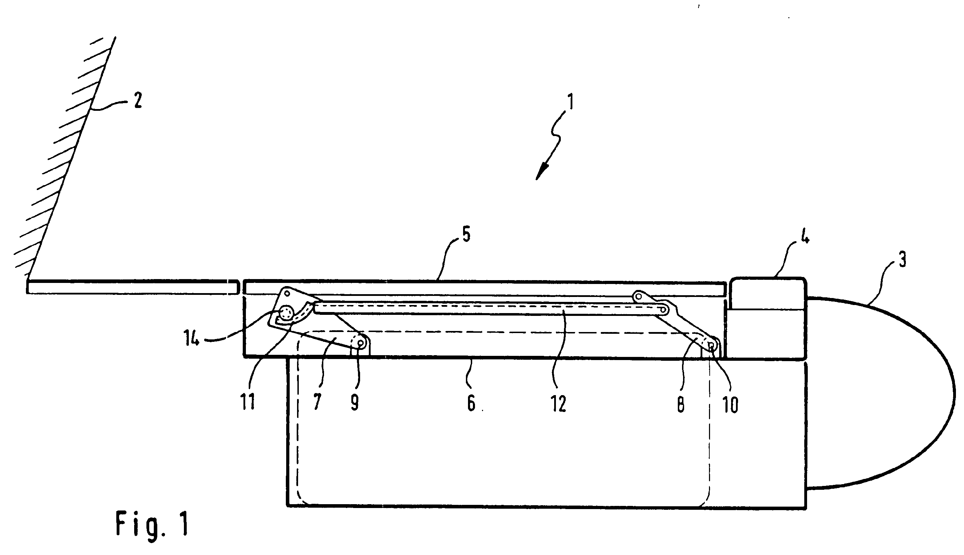

Die Figur 1 zeigt in einer schematischen Seitenansicht den Laderaum 1 eines Fahrzeugs, der in Fahrtrichtung durch einen Rücksitz 2 begrenzt wird. Oberhalb eines Stoßfängers 3 des Fahrzeugs befindet sich eine Ladekante 4. Hinter der Ladekante 4 befindet sich ein Ladeboden 5.

An einem Fahrzeugboden 6 sind Parallelogrammlenker 7 und 8 angeordnet. Die Parallelogrammlenker 7 und 8 sind um Achsen 9 bzw. 10 schwenkbar mit dem Fahrzeugbeden 6 verbunden. Vorzugsweise ist je ein Paar von Parallelogrammlenkern 7 und 8 an jeder Fahrzeugseite vorhanden, so dass der Ladeboden 5 auf den Parallelogrammlenkern 7 und 8 aufliegt.

An dem in Fahrtrichtung vorderen Parallelogrammlenker 7 befindet sich ein Zahnsegment 11. Das Zahnsegment 11 dient zur Einleitung einer Antriebskraft von einem an der Unterseite des Ladebodens 5 befestigten Antrieb, um den Ladeboden 5 durch eine Schwenkbewegung der Parallelogrammlenker 7 und 8 um die Achsen 9 bzw. 10 anzuheben.

Zwischen den Parallelogrammlenkern 7 und 8 befindet sich eine Zahnstange 12. Die Zahnstange 12 dient zur Einleitung einer Antriebskraft von dem an der Unterseite des Ladebodens 5 angeordneten Antrieb, um den Ladeboden 5 in horizontaler Richtung zu bewegen, das heißt um den Ladeboden 5 über die Ladekante 4 hinauszubewegen bzw. wieder einzufahren.

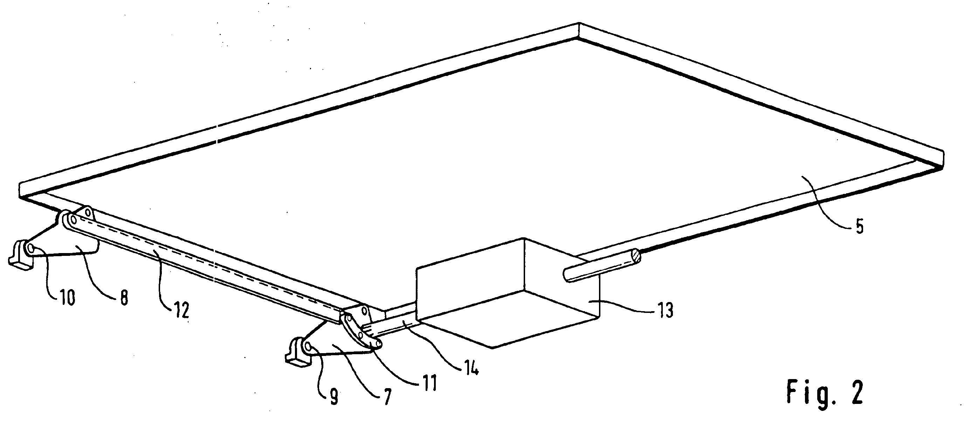

Die Figur 2 zeigt eine perspektivische Ansicht der Beladevorrichtung der Figur 2 von unten. Elemente der Figur 2, die Elementen der Figur 1 entsprechen, sind mit denselben Bezugszeichen gekennzeichnet. Die Figur 2 zeigt den Ladeboden in der gleichen Position wie in der Figur 1, das heißt in eingefahrenem Zustand. Der Übersichtlichkeit halber sind in der Figur 2 nur ein paar Parallelogrammlenker 7 und 8 mit einem Zahnsegment 11 und einer Zahnstange 12 auf der in Fahrtrichtung linken Seite des Fahrzeugs gezeigt; vorzugsweise ist dieselbe Anordnung auch auf der rechten Seite des Ladebodens 5 vorhanden.

An der Unterseite des Ladebodens 5 befindet sich ein Antrieb 13. Der Antrieb 13 beinhaltet vorzugsweise einen Elektromotor, der von einem Steuergerät angesteuert wird.

Der Antrieb 13 treibt eine Welle 14 an. In der in der Figur 2 gezeigten Position des Ladebodens 5 greift die Welle 14 in einen äußeren Bereich des Zahnsegments 11 ein. Durch Einschalten des Antriebs 13 dreht sich die Welle 14 entgegen dem Uhrzeigersinn, so dass die Welle 14 über das Zahnsegment 11 läuft. Dabei wird eine Kraft von der Welle 14 auf das Zahnsegment 11 ausgeübt, aufgrund derer eine Schwenkbewegung der Parallelogrammlenker 7 und 8 um die Achsen 9 bzw. 10 erfolgt, so dass der Ladeboden 5 angehoben wird.

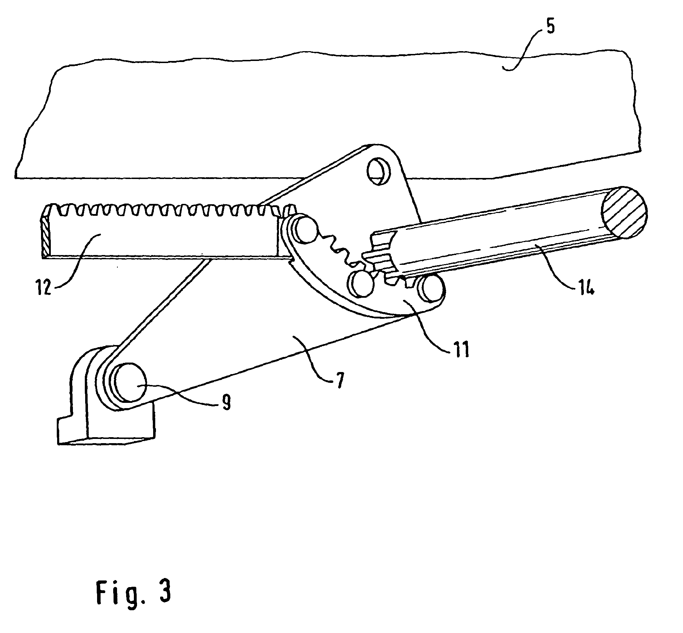

Die Figur 3 zeigt zur Verdeutlichung eine Detailansicht des Parallelogrammlenkers 7 mit dem Zahnsegment 11, in welches die Welle 14 eingreift:

Das Zahnsegment 11 und die Zahnstange 12 sind so angeordnet, dass diese unmittelbar aneinander anschließen, das heißt die Welle 14 fährt zunächst über das Zahnsegment 11, so dass der Ladeboden 5 angehoben wird, wonach die Welle 14 auf die Zahnstange 12 gelangt, so dass der Ladeboden daraufhin in einer horizontalen translatorischen Bewegung ausgeschoben wird. Dieser Bewegungsablauf ist reversibel, das heißt zum Einfahren des Ladebodens 5 wird die Welle 14 im Uhrzeigersinn angetrieben, so dass der Ladeboden in horizontaler Richtung entlang der Zahnstange 12 wieder in den Laderaum hineingefahren wird und danach durch Bewegung der Welle 14 über das Zahnsegment 11 in seine abgesenkte Position gebracht wird.

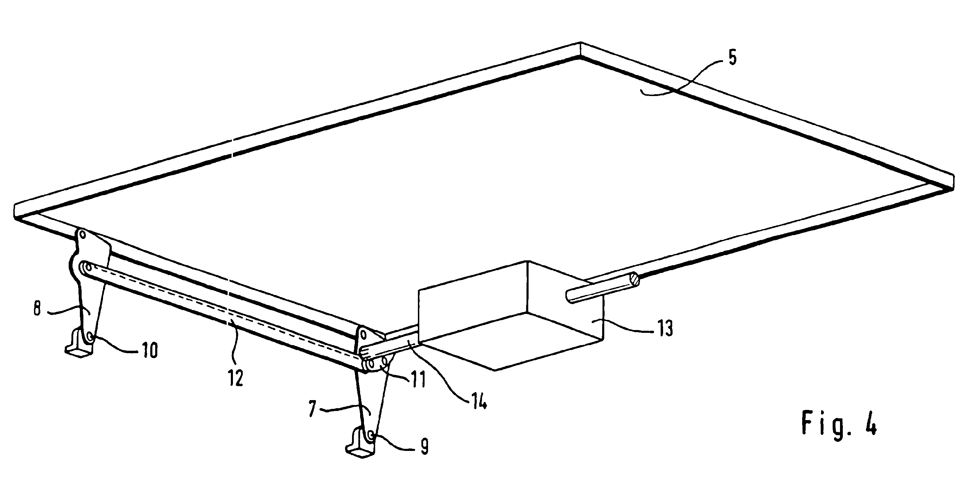

Die Figur 4 zeigt zur Verdeutlichung die Darstellung der Figur 2, wobei sich der Ladeboden 5 in seiner angehobenen Position befindet. In dieser Position geht die Bewegung des Ladebodens 5 in eine horizontale translatorische Bewegung zum Ausfahren des Ladebodens 5 aus dem Laderaum entlang der Zahnstange 12 über.

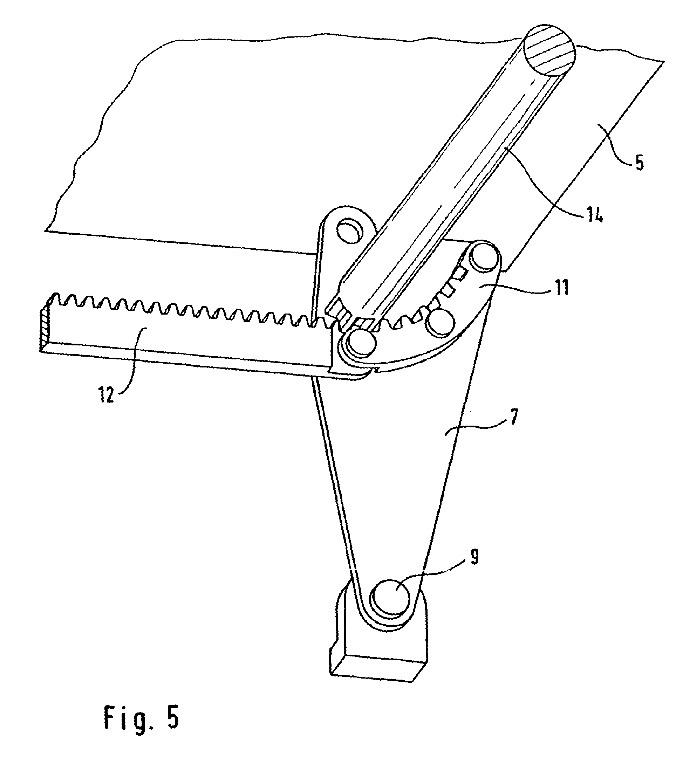

Die Figur 5 zeigt eine Detailansicht des Parallelogrammlenkers 7 mit dem Zahnsegment 11 und der Zahnstange 12 in dieser Position beim Übergang vom Anheben des Ladebodens 5 zu dem Ausfahren des Ladebodens 5 durch Überfahren der Zahnstange 12 durch die Welle 14.

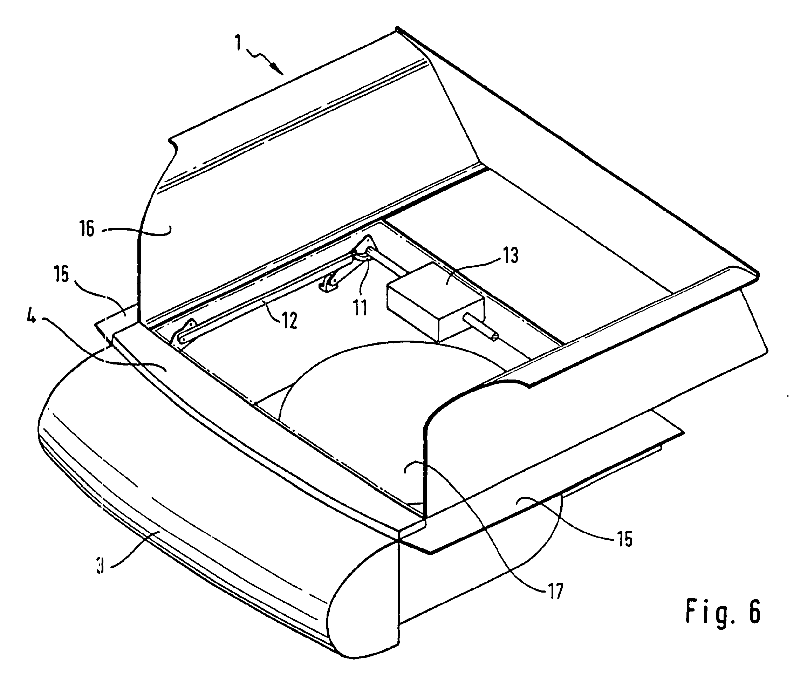

Die Figur 6 zeigt in perspektivischer Ansicht den Laderaum eines Fahrzeugs mit Heckklappe. Elemente der Figur 6, die Elementen der Figuren 1 bis 5 entsprechen, sind mit denselben Bezugszeichen gekennzeichnet.

In dem Laderaum 1 des Fahrzeugs befindet sich eine erfindungsgemäße Beladevorrichtung in eingefahrenem Zustand. Der Laderaum 1 wird durch die Karosserie 15 des Fahrzeugs und die Verkleidungen 16 begrenzt.

Auf dem Fahrzeugboden ist ein Reserverad 17 angeordnet. Hinter dem Reserverad 17 befindet sich ungefähr in der Fahrzeugmitte der Antrieb 13 der Beladevorrichtung. Besonders vorteilhaft ist hierbei, dass die Bauhöhe des Antriebs 17 nicht über die für die Unterbringung des Reserverads unter dem Ladeboden 5 benötigte Höhe hinausgeht, so dass kein Ladenutzraum verloren geht.

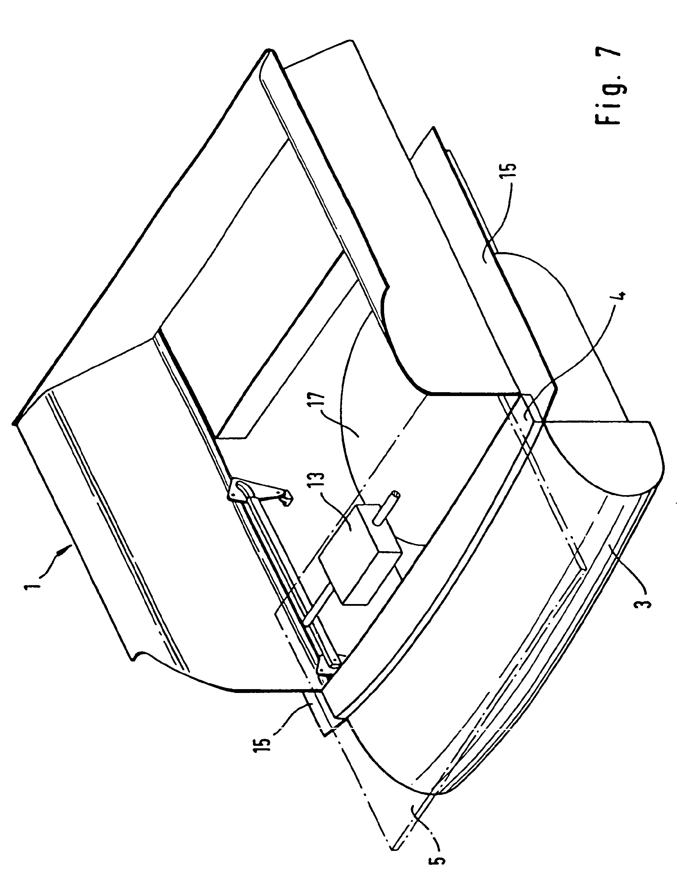

Die Figur 7 zeigt den Ladeboden 5 in ausgefahrenem Zustand. In dieser Position befindet sich der Antrieb 13 an der Unterseite des Ladebodens 5 in der Nähe der Ladekante 4, das heißt der Ladeboden 5 ist mitsamt seines Antriebs 13 aus der in der Figur 6 gezeigten Position angehoben worden und dann aus dem Laderaum 1 ausgefahren, wobei sich der Antrieb 13 in Richtung auf die Ladekante 4 zu bewegt hat.

Für die Bedienung der Beladevorrichtung, das heißt für das Ein- und Ausfahren des Ladebodens sind ein oder mehrere Bedienelemente zum Beispiel an der Instrumententafel, in dem Laderaum 1 und / oder an der Fernbedienung des Fahrzeugs vorhanden. Über das oder die Betätigungselemente können entsprechende Bewegungskommandos für den Ladeboden 5 eingegeben werden. Gibt beispielsweise ein Benutzer das Kommando zum Ausfahren des Ladebodens 5 ein, so wird dieses Kommando von dem Steuerungsgerät des Fahrzeugs empfangen. Dieses gibt dann einen Steuerungsimpuls ab, um den Antrieb 13 einzuschalten, so dass der Ladeboden 5 angehoben und dann ausgefahren wird.

Entsprechend wird für das Einfahren des Ladebodens 5 ein Bewegungskommando eingegeben, so dass der Antrieb 13 mit entgegengesetzter Drehrichtung eingeschaltet wird, bis der Ladeboden 5 vollständig eingefahren ist.

Bevorzugt weist das Fahrzeug ferner eine Vorrichtung zum automatischen Öffnen und Schließen der Heckklappe auf. Solche Vorrichtungen sind an sich aus dem Stand der Technik bekannt. Bevorzugt wird auch diese Vorrichtung zum automatischen Öffnen und Schließen der Heckklappe von dem Steuergerät des Fahrzeugs angesteuert. Erfolgt nun die Eingabe eines Bewegungskommandos, so wird das Öffnen und Schließen der Heckklappe entsprechend koordiniert, das heißt wenn ein Kommando zum Ausfahren des Ladebodens 5 eingegeben wird, wird zunächst die Heckklappe automatisch geöffnet, bevor der Ladeboden ausfährt. Entsprechend wird nach dem Einfahren des Ladebodens 5 die Heckklappe automatisch wieder geschlossen.

### Bezugszeichenliste

- Laderaum: 1
- Rücksitz: 2
- Stoßfänger: 3
- Ladekante: 4
- Ladeboden: 5
- Fahrzeugboden: 6
- Parallelogrammlenker: 7
- Parallelogrammlenker: 8
- Achse: 9
- Achse: 10
- Zahnsegment: 11
- Zahnstange: 12
- Antrieb: 13
- Welle: 14
- Karosserie: 15
- Verkleidung: 16
- Reserverad: 17

## Patentansprüche

1. Beladevorrichtung für ein Fahrzeug, mit einem in einem Laderaum (1) des Fahrzeugs angeordneten Ladeboden (5), mit Mitteln (7, 8, 11) zur vertikalen Höhenverstellung des Ladebodens (5) innerhalb des Laderaums (1), mit Mitteln (7, 8, 12) zur horizontalen Verlagerung des Ladebodens (5), nämlich zum Herausfahren und Hereinfahren des Ladebodens (5) aus dem bzw. in den Laderaum (1), und mit Antriebsmitteln (13, 14) zum Antrieb der Mittel (7, 8, 11) zur vertikalen Höhenverstellung des Ladebodens (5) und zum Antrieb der Mittel (7, 8, 12) zur horizontalen Verlagerung des Ladebodens (5),
**dadurch gekennzeichnet, dass**
die Antriebsmittel im eingefahrenen Zustand an der Unterseite des Ladebodens an der der Ladekante (4) abgewandten Seite des Ladebodens angeordnet sind.

2. Beladevorrichtung nach Anspruch 1, **dadurch gekennzeichnet, dass** die Mittel zur Höhenverstellung Parallelogrammlenker (7, 8) aufweisen, und mindestens einer der Parallelogrammlenker durch die Antriebsmittel antreibbar ist.

3. Beladevorrichtung nach Anspruch 2, **dadurch gekennzeichnet, dass** mindestens einer der Parallelogrammlenker ein Zahnsegment (11) aufweist, und die Antriebsmittel eine Welle (14) aufweisen, die zum Antrieb des Zahnsegments ausgebildet ist.

4. Beladevorrichtung nach Anspruch 3, **dadurch gekennzeichnet, dass** das Zahnsegment bogenförmig, insbesondere in der Form eines Kreissegments, ausgebildet ist.

5. Beladevorrichtung nach einem der vorhergehenden Ansprüche 1 bis 4, **dadurch gekennzeichnet, dass** die Mittel zur horizontalen Verlagerung eine Zahnstange (12) aufweisen, die zwischen zumindest zwei in Richtung der horizontalen Bewegung hintereinander angeordneten Parallelogrammlenkern (7, 8) angeordnet ist, und die Antriebsmittel eine Welle (14) aufweisen, die zur Einleitung einer Kraft in die Zahnstange für die horizontale Bewegung des Ladebodens ausgebildet ist.

6. Beladevorrichtung nach Anspruch 5, **dadurch gekennzeichnet, dass** das Zahnsegment und die Zahnstange so angeordnet sind, dass die Welle bei der Höhenverstellung des Ladebodens über das Zahnsegment läuft und bei der horizontalen Verlagerung des Ladebodens über die Zahnstange läuft.

7. Beladevorrichtung nach einem der vorhergehenden Ansprüche 1 bis 6, **dadurch gekennzeichnet, dass** die Antriebsmittel einen elektrischen Antrieb aufweisen.

8. Beladevorrichtung nach einem der vorhergehenden Ansprüche 1 bis 7, **gekennzeichnet durch** Eingabemittel zur Eingabe eines Bewegungskommandos in ein Steuergerät für den Ladeboden, und mit Mitteln zur automatischen Öffnung und/oder Schließung einer Heckklappe des Fahrzeugs, wobei die Mittel zur automatischen Öffnung und/oder Schließung mit dem Steuergerät so gekoppelt sind, dass beim Ausfahren des Ladebodens eine Öffnung der Heckklappe erfolgt und/oder beim Einfahren des Ladebodens die Heckklappe geschlossen wird.

## Claims

1. Loading apparatus for a vehicle, having a loading floor (5) arranged in a load space (1) of the vehicle, and having means (7, 8, 11) for vertical height adjustment of the loading floor (5) within the load space (1), and having means (7, 8, 12) for horizontal transposition of the loading floor (5) namely for extending the loading floor (5) from and retracting it into the load space (1), and having drive means (13, 14) for driving the means (7, 8, 11) for vertical adjustment of the loading floor (5) and for driving the means (7, 8, 12) for horizontal transposition of the loading floor (5) **characterised in that** the drive means are arranged on the underside of the loading floor at the side of the loading floor which in the retracted state is remote from its loading edge (4).

2. Loading apparatus according to claim 1, **characterised in that** the means for height adjustment have parallelogram guides (7, 8), and at least one of the parallelogram guides can be driven by the drive means.

3. Loading apparatus according to claim 2, **characterised in that** at least one of the parallelogram guides has a toothed segment (11) and the drive means have a shaft (14) constructed for driving the toothed segment.

4. Loading apparatus according to claim 3, **characterised in that** the toothed segment is arcuate, especially in the shape of a segment of a circle.

5. Loading apparatus according to one of the preceding claims 1 to 4, **characterised in that** the means for horizontal transposition have a toothed rack (12) which is arranged between at least two parallelogram guides (7, 8) arranged behind each other in the direction of horizontal movement, and the drive means have a shaft (14) which is constructed to introduce force to the toothed rack for horizontal movement of the loading floor.

6. Loading apparatus according to claim 5, **characterised in that** the toothed segment and the toothed rack are so arranged that the shaft travels over the toothed segment during height adjustment of the loading floor and over the toothed rack during horizontal transposition of the loading floor.

7. Loading apparatus according to one of the preceding claims 1 to 6, **characterised in that** the drive means have an electric drive.

8. Loading apparatus according one of the preceding claims 1 to 7, **characterised by** input means for inputting a movement command into a control device for the loading floor, and having means for automated opening and/or closing of a tailgate of the vehicle, the means for automated opening and/or closing being coupled with the control device such that opening of the tailgate takes place upon extending of the loading floor and/or that the tailgate is closed upon retraction of the loading floor.

## Revendications

1. Dispositif de chargement pour un véhicule avec une plateforme de chargement (5) située dans une chambre de chargement (1) du véhicule, avec des moyens (7, 8, 11) pour soulever verticalement la plateforme de chargement (5) dans la chambre de chargement ((1) avec des moyens (7, 8, 12) pour déplacer horizontalement la plateforme de chargement (5), par exemple, pour guider à chaque fois la plateforme de chargement (5) vers l'extérieur et l'intérieur, dans la chambre de chargement (1), pour entraîner les moyens (7, 8, 11) avec les moyens d'entraînement (13, 14) pour obtenir un soulèvement verticale de la plateforme de chargement (5) et pour entraîner les moyens (7, 8, 12) pour déplacer horizontalement la plateforme de chargement (5), **caractérisé en ce que**, les moyens d'entraînement sont situés sur le côté inférieur de la plateforme de chargement lorsqu'ils sont introduits sur le côté de la plateforme de chargement détourné du bord de chargement (4).

2. Dispositif de chargement selon la revendication 1, **caractérisé en ce que** les moyens à soulever ont des guidages à parallélogramme (7, 8) et au moins un des guidages à parallélogramme peut être entraîné par des moyens d'entraînement.

3. Dispositif de chargement selon la revendication 2, **caractérisé en ce qu'**au moins un des guidages à parallélogramme comporte un segment d'engrenage (11) et **en ce que** les moyens d'entraînement comporte un arbre (14) réalisé de manière à entraîner le segment d'engrenage.

4. Dispositif de chargement selon la revendication 3, **caractérisé en ce que** le segment d'engrenage est courbé, particulièrement sous forme d'un segment de circule.

5. Dispositif selon une des revendications 1 à 4, **caractérisé en ce que** les moyens comportent une tige dentée (12) susceptible d'être bougée horizontalement et lesquels moyens sont situés entre au moins deux guidages à parallélogramme (7, 8) placés l'un derrière l'autre, et les moyens d'entraînement ont un arbre (14) formé de manière à introduire une force dans la tige dentée pour déplacer horizontalement la plateforme de chargement.

6. Dispositif de chargement selon la revendication 5, **caractérisé en ce que** le segment d'engrenage et la tige dentée sont de manière à guider l'arbre sur la tige dentée grâce à un mouvement horizontal de la plateforme de chargement.

7. Dispositif selon une des revendications 1 à 6, **caractérisé en ce que** les moyens d'entraînement comportent un entraînement électrique.

8. Dispositif selon une des revendications 1 à 7, **caractérisé par** des moyens d'entrée pour introduire une commande de mouvement dans l'unité de contrôle pour la plateforme de chargement, et par des moyens pour ouvrit et / ou fermer automatiquement un clapet arrière de véhicule ; les moyens pour une ouverture et / ou fermeture étant couplés avec le dispositif de guidage de manière à générer une ouverture du clapet arrière lorsque la plateforme de chargement est libérée et / ou pour générer une fermeture du clapet arrière lorsque la plateforme de chargement est rentrée.
